# EUROPEAN PATENT APPLICATION

(11) **EP 4 190 447 A1**
(43) Date of publication of application: **07.06.2023**
(21) Application number: 21849066.2
(22) Date of filing: 13.07.2021
(51) Int. Cl.: B01J 35/04, B01J 19/00, B01J 19/24

(54) **HONEYCOMB SUBSTRATE HOLDER**

(30) Priority: 28.07.2020 JP 2020127376
(71) Applicant: CATALER CORPORATION, Kakegawa-shi, Shizuoka 437-1492 (JP)
(72) Inventor: KOSAKA, Tamio, Kakegawa-shi, Shizuoka 437-1492 (JP); MIZUKAMI, Tomohito, Kakegawa-shi, Shizuoka 437-1492 (JP); SAITO, Yusuke, Kakegawa-shi, Shizuoka 437-1492 (JP)
(74) Representative: Ricker, Mathias
(86) International application number: PCT/JP2021/026333
(87) International publication number: WO 2022/024748

(57) **Abstract**

Provided is a honeycomb substrate holder for holding a honeycomb substrate, the honeycomb substrate holder comprising: an elastically deformable cylindrical inner circumferential wall 10; a cylindrical outer circumferential wall 30 located outside the cylindrical inner circumferential wall 10 with a cylindrical gap 20 from the cylindrical inner circumferential wall 10; and two end faces 41, 42 sealing the cylindrical gap 20 together with the cylindrical inner circumferential wall 10 and the cylindrical outer circumferential wall 30. A honeycomb substrate can be inserted on the axial side of the cylindrical inner circumferential wall 10. Fluid can be circulated or held in the cylindrical gap 20. The cylindrical inner circumferential wall 10 can be elastically deformed and pressed against an outer circumferential surface of the honeycomb substrate by pressurizing the fluid in the cylindrical gap 20.

## Description

### FIELD

The present invention relates to a honeycomb substrate holder for retaining a honeycomb substrate used as a reactor for chemical reactions.

### BACKGROUND

The use of a substrate shaped to allow fluids to circulate as a reactor for reacting fluid reactants in liquid phase or gas phase is known. The substrate may support a catalyst for the reaction.

For example, PTL 1 describes that a catalyst layer is formed on a surface of a honeycomb-shaped support made from cordierite, a carbon composite, or mullite. PTL 2 describes that a fine-bubbled gas phase reactant and a liquid phase reactant are supplied to a wall flow-type porous honeycomb substrate for a reaction.

There are many advantages to using a honeycomb substrate as a reactor for chemical reactions. For example, the following advantages are considered:
A honeycomb substrate has high mechanical durability and can withstand stresses from heating, cooling, pressurization, and depressurization for reactions for a long period of time;
a honeycomb substrate has a large surface area per unit capacity, and contact frequency between a catalyst supported thereon and a reactant can be increased; and
in the case of a porous substrate, by appropriately selecting a pore size, it is possible for reactants having specific molecular diameters to be selectively reacted or not reacted.

### [CITATION LIST]

### [PATENT LITERATURE]

[PTL 1] Japanese Unexamined Patent Publication (Kokai) No. 2008-110341
[PTL 2] Japanese Unexamined Patent Publication (Kokai) No. 2020-40022

### SUMMARY

### [TECHNICAL PROBLEM]

However, there are some considerations when using honeycomb substrates as reactors.

For example, a flange comprising a reactant introduction port and a flange comprising a product discharge port are mounted on respective ends of a honeycomb substrate. A product obtained by introducing reactants into the honeycomb substrate from the reactant introduction port and passing the reactants through the honeycomb substrate is discharged from the product discharge port. At this time, it is necessary to suppress leakage of the reactants and the product from gaps between the end faces of the honeycomb substrate and the flanges. In this regard, in the prior art, it is necessary to place sealing materials such as O-rings between both ends of the honeycomb substrate and the two flanges to seal the gaps between the end faces of the honeycomb substrate and the flanges.

In the case of a porous honeycomb substrate, reactants exude from an outer peripheral surface of the honeycomb substrate through the pores on the honeycomb substrate wall. To prevent this, it is necessary to seal the outer peripheral surface of the honeycomb substrate by wrapping, for example, a film made of a fluororesin therearound.

A honeycomb substrate is placed into a thermostatic chamber for control of reaction temperature. At this time, it is necessary to place at least a portion of the piping for supplying reactants to the honeycomb substrate and for discharging a product together with the honeycomb substrate into the thermostatic chamber. Thus, there is a problem that a thermostatic chamber having a large capacity is required. Further, when the heat medium of the thermostatic chamber is air, there is a problem that heat transfer rate is slow.

An object of the present invention is to provide a honeycomb substrate holder capable of solving at least one of the above problems that occur when a porous honeycomb substrate is used as a reactor for chemical reactions.

### [SOLUTION TO PROBLEM]

The present invention is as follows.
«Aspect 1» A honeycomb substrate holder for retaining a honeycomb substrate used as a reactor, wherein
   the honeycomb substrate holder comprises at least
      an elastically deformable tubular inner peripheral wall;
      a tubular outer peripheral wall arranged outside the tubular inner peripheral wall via a tubular gap with the tubular inner peripheral wall; and
      two end faces sealing the tubular gap with the tubular inner peripheral wall and the tubular outer peripheral wall,
   the honeycomb substrate can be inserted into an axis side of the tubular inner peripheral wall,
   a fluid can be circulated or retained inside the tubular gap, and
   by pressurizing the fluid inside the tubular gap, the tubular inner peripheral wall can be elastically deformed and the tubular inner peripheral wall can be pressed against an outer peripheral surface of the honeycomb substrate.
«Aspect 2» The honeycomb substrate holder according to Aspect 1, comprising one or more fluid introduction ports for introducing the fluid into the tubular gap and one or more fluid discharge ports for discharging the fluid from the tubular gap at any positions on the tubular outer peripheral wall and the end faces.
«Aspect 3» The honeycomb substrate holder according to Aspect 1 or 2, wherein the fluid is a heat medium or a coolant.
«Aspect 4» The honeycomb substrate holder according to Aspect 1 or 2, comprising a temperature regulator inside the tubular gap.
«Aspect 5» The honeycomb substrate holder according to Aspect 1 or 2, comprising a temperature regulator outside the tubular outer peripheral wall.
«Aspect 6» The honeycomb substrate holder according to any one of Aspects 1 to 5, wherein the tubular inner peripheral wall, the tubular outer peripheral wall, and the two end faces are integrally formed and elastically deformable.
«Aspect 7» The honeycomb substrate holder according to any one of Aspects 1 to 6, comprising a tubular support wall outside the tubular outer peripheral wall.
«Aspect 8» The honeycomb substrate holder according to any one of Aspects 1 to 7, wherein the tubular inner peripheral wall has a cylindrical shape or a polygonal tubular shape.
«Aspect 9» A reaction method, comprising
   inserting a honeycomb substrate into an axis side of a tubular inner peripheral wall of the honeycomb substrate holder according to any one of Aspects 1 to 8, and
   using the honeycomb substrate as a reactor to carry out a chemical reaction.
«Aspect 10» The reaction method according to Aspect 9, wherein the chemical reaction is a chemical reaction between a liquid phase reactant and a fine-bubbled gas phase reactant.
«Aspect 11» The reaction method according to Aspect 9 or 10, wherein the honeycomb substrate
   includes a plurality of channels, the channels being separated by a porous wall, wherein
   the porous wall is composed of a porous body that includes open pores penetrating in a thickness direction of the porous wall.
«Aspect 12» The reaction method according to Aspect 11, wherein the porous wall comprises a reaction catalyst at least on a surface thereof.

### [ADVANTAGEOUS EFFECTS OF INVENTION]

According to the present invention, a honeycomb substrate holder capable of at least one of: preventing exudation of reactants from a gap between an end face of a honeycomb substrate and a flange without using a sealing material; controlling a reaction temperature efficiently without requiring a thermostatic chamber having a large capacity; and in the case of a porous honeycomb substrate, preventing exudation of reactants from an outer peripheral surface of the honeycomb substrate, when the honeycomb substrate is used as a reactor for chemical reactions, is provided.

### BRIEF DESCRIPTION OF DRAWINGS

FIG. 1 is a schematic perspective view showing an example of a configuration of the honeycomb substrate holder of the present invention.
FIG. 2 is a cross-sectional view of the honeycomb substrate holder of FIG. 1 along the A-A line.
FIG. 3 is a schematic perspective view showing another example of a configuration of the honeycomb substrate holder of the present invention.
FIG. 4 is a cross-sectional view of the honeycomb substrate holder of FIG. 3 along the A-A line.
FIG. 5 is a schematic perspective view showing yet another example of a configuration of the honeycomb substrate holder of the present invention.
FIG. 6 is a cross-sectional view of the honeycomb substrate holder of FIG. 5 along the A-A line.
FIG. 7 is a schematic cross-sectional view showing a configuration of a reaction apparatus used in Comparative Examples 1 and 2.
FIG. 8 is a schematic cross-sectional view showing a configuration of a reaction apparatus used in Examples 1 and 2.
FIG. 9 is a graph showing changes over time of discharged water temperature, obtained in Example 2 and Comparative Example 2.

### DESCRIPTION OF EMBODIMENTS

### <<Honeycomb substrate holder>>

The honeycomb substrate holder of the present invention is a honeycomb substrate holder for retaining a honeycomb substrate used as a reactor, comprising at least
an elastically deformable tubular inner peripheral wall;
a tubular outer peripheral wall arranged outside the tubular inner peripheral wall via a tubular gap with the tubular inner peripheral wall; and
two end faces sealing the tubular gap with the tubular inner peripheral wall and the tubular outer peripheral wall, wherein
   a honeycomb substrate can be inserted into an axis side of the tubular inner peripheral wall, and
   a fluid, which is a heat medium or a coolant, can be circulated or retained inside the tubular gap.

In the honeycomb substrate holder of the present invention, the tubular inner peripheral wall is elastically deformable. Therefore, by pressurizing a fluid inside the tubular gap, the tubular inner peripheral wall can be elastically deformed and the tubular inner peripheral wall can be pressed against an outer peripheral surface of a honeycomb substrate.

In a preferred aspect of the present invention, the tubular inner peripheral wall elastically deforms according to the shape of the outer peripheral surface of the honeycomb substrate, makes close contact with the outer peripheral surface, and blocks the pores opened on the outer surface. When a porous honeycomb substrate is used as a reactor for reacting fluid-like reactants, exudation of the reactants from the outer peripheral surface of the honeycomb substrate can thereby be prevented.

In another preferred aspect of the present invention, when the tubular inner peripheral wall is pressed against the outer peripheral surface of the honeycomb substrate, the tubular inner peripheral wall follows the shape of the pores on the outer surface of the honeycomb substrate to elastically deform and enter inside the pores. Exudation of reactants from the outer peripheral surface of the honeycomb substrate can thereby be prevented more effectively.

The tubular inner peripheral wall may be configured to press against a contact portion between the honeycomb substrate and a flange comprising a reactant introduction port and/or a flange comprising a product discharge port by elastic deformation of the tubular inner peripheral wall due to pressurization of a fluid inside the tubular gap when the flange is connected to an end face of the honeycomb substrate. As a result, exudation of reactants from the contact portion between the end face of the honeycomb substrate and the flange can be prevented without arranging an O-ring at the contact portion.

In the honeycomb substrate holder of the present invention, the tubular inner peripheral wall makes close contact with the outer peripheral surface of the honeycomb substrate. When the fluid inside the tubular gap is a heat medium or a coolant, the heat medium can thereby exchange heat with the honeycomb substrate and the reactants contained therein without including an intermediary having low thermal conductivity, such as air. As a result, reaction temperature can be controlled efficiently without using a thermostatic chamber having a large capacity.

Hereinafter, each element constituting the honeycomb substrate holder of the present invention will be described in order.

### <Tubular inner peripheral wall>

The tubular inner peripheral wall of the honeycomb substrate holder of the present invention is elastically deformable. Therefore, by pressurizing a fluid inside the tubular gap, the tubular inner peripheral wall can be elastically deformed and the tubular inner peripheral wall can be pressed against an outer peripheral surface of the honeycomb substrate. Preferably, the tubular inner peripheral wall can additionally be pressed against a contact portion between the honeycomb substrate and a flange comprising a reactant introduction port and/or a flange comprising a product discharge port.

The tubular inner peripheral wall may have any shape, for example, a cylindrical shape or a polygonal tubular shape. It is intended that a honeycomb substrate be inserted into an axis side of the tubular inner peripheral wall and the honeycomb substrate be used to carry out a chemical reaction. Therefore, the shape of the tubular inner peripheral wall may be appropriately set by matching the shape of the honeycomb substrate intended to be inserted and used.

The size of the tubular inner peripheral wall is arbitrary, and may be appropriately set by matching the size of the honeycomb substrate intended to be inserted therein and used. Therefore, the length of the tubular inner peripheral wall in the axial direction may be substantially the same as the length of the honeycomb substrate. Alternatively, the present invention encompasses an aspect in which the length of the tubular inner peripheral wall is shorter than the length of the honeycomb substrate, and one honeycomb substrate is retained by a plurality of honeycomb substrate holders.

The material of the tubular inner peripheral wall may be any material as long as the material is an elastic material having a level of elasticity at which the tubular inner peripheral wall can be pressed against the outer peripheral surface of the honeycomb substrate when a fluid inside the tubular gap is pressurized. The elastic material may be a rubber such as a vulcanized rubber or a thermoplastic elastomer, specifically, for example, natural rubber (NR), isoprene rubber (IR), styrene-butadiene rubber (SBR), butadiene rubber (BR), chloroprene rubber (CR), butyl rubber (IIR), nitrile rubber (NBR), ethylene propylene rubber (EPM, EPDM), chlorosulfonated polyethylene rubber (CSM), acrylic rubber (ACM), silicone rubber (VMQ, PVMQ, FVMQ), fluororubber (FKM), or polysulfide rubber (T).

### <Tubular outer peripheral wall>

The tubular outer peripheral wall is arranged via a tubular gap with the tubular inner peripheral wall. The tubular outer peripheral wall, together with the tubular inner peripheral wall, seals the tubular gap and serves as a part of the function of circulating or retaining a fluid, which is a heat medium or a coolant, inside the tubular gap.

The shape of the tubular outer peripheral wall may or may not be similar to the tubular inner peripheral wall, as long as the tubular outer peripheral wall can be arranged via the tubular gap with the tubular inner peripheral wall. The shape of the tubular outer peripheral wall can be exemplified by a cylindrical shape or a polygonal tubular shape.

The size of the tubular outer peripheral wall is arbitrary as long as the tubular outer peripheral wall can be arranged via the tubular gap with the tubular inner peripheral wall. The length of the tubular outer peripheral wall in the axial direction may be substantially the same as the length of the tubular inner peripheral wall in the axial direction. The ratio of a cross-sectional area of the tubular outer peripheral wall in a direction perpendicular to the axial direction to a cross-sectional area of the tubular inner peripheral wall in a direction perpendicular to the axial direction is greater than 1. By adjusting this ratio, the capacity of the tubular gap can be set to an appropriate value.

The tubular outer peripheral wall may be elastically deformable or may not be elastically deformable. Therefore, the material of the tubular outer peripheral wall may be the same elastic material as that of the tubular inner peripheral wall, or may be a hard material. The hard material may be, for example, a synthetic resin such as polyethylene, polypropylene, polystyrene, polyurethane, ABS resin, AS resin, or acrylic resin, or a metal or alloy such as iron, tinplate, galvanized iron, aluminum, copper, or stainless steel.

### <End face>

The end face seals the tubular gap with the tubular inner peripheral wall and the tubular outer peripheral wall, and serves as a part of the function of circulating or retaining a fluid, particularly a heat medium or a coolant, inside the tubular gap.

The shape of the end face may be a shape that blocks an area between the end faces of the tubular inner peripheral wall and the tubular outer peripheral wall, and may be appropriately set according to the shapes of the tubular inner peripheral wall and the tubular outer peripheral wall. For example, when both the tubular inner peripheral wall and the tubular outer peripheral wall are cylindrical, the end face may be ring-shaped (annular). When both the tubular inner peripheral wall and the tubular outer peripheral wall are polygonal tubular shapes, the end face may have a shape having a polygonal hole at the center of the polygon.

The size of the end face may be any size as long as an area between the end faces of the tubular inner peripheral wall and the tubular outer peripheral wall can be blocked. When both the tubular inner peripheral wall and the tubular outer peripheral wall are cylindrical and the end face is ring-shaped, the outer diameter of the ring-shaped end face may be substantially the same as the diameter of the tubular outer peripheral wall in a direction perpendicular to the axial direction, and the inner diameter of the ring-shaped end face may be substantially the same as the diameter of the tubular inner peripheral wall in a direction perpendicular to the axial direction.

The end face may be elastically deformable or may not be elastically deformable. Therefore, the material of the end face may be the same as that of the tubular outer peripheral wall.

### <Configuration of tubular inner peripheral wall, tubular outer peripheral wall, and end face>

The tubular inner peripheral wall, the tubular outer peripheral wall, and the end face may be manufactured as separate members and then joined together to form the honeycomb substrate holder of the present invention. However, from the viewpoints of simplifying the manufacturing process of the honeycomb substrate holder and preventing leakage of the fluid circulating or retained in the tubular gap, the tubular inner peripheral wall, the tubular outer peripheral wall, and the two end faces may be integrally formed. In this case, the tubular inner peripheral wall, the tubular outer peripheral wall, and the two end faces may all be elastically deformable.

### <Tubular gap>

The tubular gap has a function of circulating or retaining a fluid. As a result, when a fluid inside the tubular gap is pressurized, the tubular inner peripheral wall can be elastically deformed to press against the outer peripheral surface of the honeycomb substrate. When the fluid is a heat medium or a coolant, the temperature of a reaction carried out using the honeycomb substrate as a reactor can be controlled.

When the fluid is a heat medium or a coolant, it is desirable for the tubular gap to be able to accommodate a certain amount of fluid to effectively control the temperature of a reaction carried out using the honeycomb substrate as a reactor. From this viewpoint, the capacity of the tubular gap may be 0.3-fold or greater, 0.5-fold or greater, 1-fold or greater, 3-fold or greater, 5-fold or greater, 10-fold or greater, or 15-fold or greater of the capacity of the honeycomb substrate. However, even if the capacity of the tubular gap is increased without limit, the efficiency of temperature control of the reaction is not proportionally improved. From this viewpoint, the capacity of the tubular gap may be 100-fold or less, 50-fold or less, 30-fold or less, or 20-fold or less of the capacity of the honeycomb substrate.

A spiral channel may be provided in the tubular gap so that the fluid advances spirally inside the tubular gap, thereby allowing uniform heat exchange between the fluid and the entire outer peripheral surface of the honeycomb substrate.

The tubular gap may be divided into a plurality of sections along the flow direction of the reactants. In this case, a fluid introduction port and a fluid discharge port may be provided for each section, thereby allowing a different temperature control for each section of the tubular gap.

### <Fluid introduction port and fluid discharge port>

The honeycomb substrate holder of the present invention may include one or more fluid introduction ports for introducing a fluid into the tubular gap and one or more fluid discharge ports for discharging the fluid from the tubular gap at any positions on the tubular outer peripheral wall and the end faces.

When the fluid, which is a heat medium or a coolant, is circulated inside the tubular gap, an inlet and an outlet of the fluid are preferably separated as much as possible so that the fluid can circulate evenly inside the tubular gap without staying in a specific portion of the tubular gap and heat exchange with the honeycomb substrate can be carried out efficiently. From this viewpoint, it is preferable that one of the fluid introduction port and the fluid discharge port be arranged on one of the two end faces or near that end face of the tubular outer peripheral wall, and the other of the fluid introduction port and the fluid discharge port be arranged on the other of the two end faces or near that end face of the tubular outer peripheral wall.

When the honeycomb substrate holder of the present invention comprises two or more fluid introduction ports, the fluid introduction ports may be arranged at positions close to each other, or may be arranged at positions distant from each other.

When the honeycomb substrate holder of the present invention comprises two or more fluid discharge ports, the fluid introduction ports may be arranged at positions close to each other, or may be arranged at positions distant from each other.

The number of fluid introduction ports and fluid discharge ports may each independently be 1 or greater, 2 or greater, 3 or greater, or 4 or greater, and may be 10 or less, 8 or less, 6 or less, 4 or less, 3 or less, or 2 or less.

The fluid introduction port and the fluid discharge port may each have a shape that can be connected to a fluid supply source and a fluid discharge destination, and may each have, for example, a tubular shape projecting from an end face or the tubular outer peripheral wall.

The material of the fluid introduction port and the fluid discharge port may be any material as long as the leakage of a fluid can be prevented, and may be the same material as the end faces or the tubular outer peripheral wall or may be a different material therefrom.

### <Temperature regulator>

The honeycomb substrate holder of the present invention may further comprise a temperature regulator. This temperature regulator may be, for example, a ribbon heater for heating or a Peltier element for cooling.

The temperature regulator may be, for example, arranged inside the tubular gap or arranged outside the tubular outer peripheral wall. The embodiment of the present invention also includes an aspect in which the temperature regulators are arranged both inside the tubular gap and outside the tubular outer peripheral wall.

Even when the fluid used in the honeycomb substrate holder of the present invention is a heat medium or a coolant, the honeycomb substrate holder of the present invention may comprise a temperature regulator. When the honeycomb substrate holder of the present invention comprises a temperature regulator and the fluid used is a heat medium or a coolant, the temperature of a chemical reaction carried out using a honeycomb substrate inserted as a reactor into the honeycomb substrate holder of the present invention can be controlled very effectively.

### <Tubular support wall>

The honeycomb substrate holder of the present invention may comprise a tubular support wall outside the tubular outer peripheral wall. When the honeycomb substrate holder of the present invention comprises a temperature regulator outside the tubular outer peripheral wall, the tubular support wall may be arranged further outside the temperature regulator.

The shape of the tubular support wall is arbitrary as long as the tubular outer peripheral wall can be covered, and may or may not be a similar shape to the tubular outer peripheral wall. The shape of the tubular support wall can be exemplified by a cylindrical shape or a polygonal tubular shape.

The size of the tubular support wall is arbitrary as long as the tubular outer peripheral wall can be covered. The length of the tubular support wall in the axial direction may be substantially the same as the length of the tubular outer peripheral wall in the axial direction.

If the honeycomb substrate holder comprises a tubular support wall, the fluid inside the tubular gap can be thermally insulated. In addition, if the tubular outer peripheral wall is made of an elastic material, when the fluid inside the tubular gap is pressurized, the tubular support wall prevents the tubular outer peripheral wall from elastically deforming radially outward, and assists in pressing against the outer periphery of the honeycomb substrate by the elastic deformation of the tubular inner peripheral wall.

Therefore, the material of the tubular support wall may be a hard material from the viewpoint of preventing elastic deformation of the tubular outer peripheral wall. From the viewpoint of thermally insulating the fluid inside the tubular gap, the material may have a large heat capacity. Combining these viewpoints, the material of the tubular support wall may be, for example, a synthetic resin, a ceramic, or a metal.

The synthetic resin constituting the tubular support wall may be one or more selected from, for example, polyethylene, polypropylene, polystyrene, polyurethane, ABS resin, AS resin, and acrylic resin. The ceramic may be one or more selected from, for example, alumina, zirconia, aluminum nitride, silicon carbide, silicon nitride, forsterite, steatite, SiAlON, and mullite. The metal may be one or more selected from, for example, aluminum, duralumin, titanium and iron.

### <Specific example of honeycomb substrate holder>

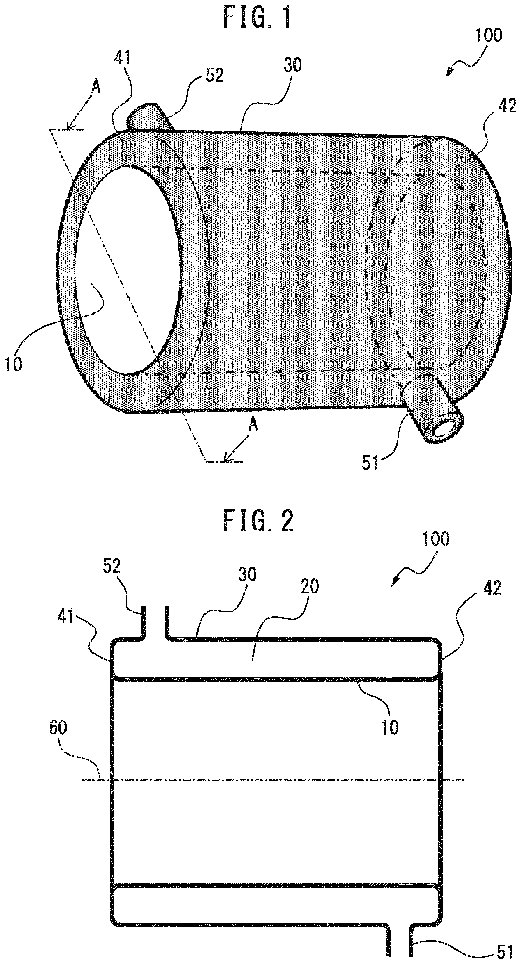

Examples of the honeycomb substrate holder of the present invention are shown in FIGS. 1 to 6.

FIG. 1 is a schematic perspective view showing an example of a configuration of the honeycomb substrate holder of the present invention. FIG. 2 is a cross-sectional view of the honeycomb substrate holder of FIG. 1 along the A-A line.

The honeycomb substrate holder (100) of FIGS. 1 and 2 comprises
an elastically deformable tubular inner peripheral wall (10);
a tubular outer peripheral wall (30) arranged outside the tubular inner peripheral wall (10) via a tubular gap (20) with the tubular inner peripheral wall (10); and
two end faces (41, 42) sealing the tubular gap (20) with the tubular inner peripheral wall (10) and the tubular outer peripheral wall (30).

In the honeycomb substrate holder (100), the tubular inner peripheral wall (10) and the tubular outer peripheral wall (30) have substantially the same length along an axis (60). In addition, the two end faces (41, 42) have a ring shape. The outer diameter of the ring is substantially the same as the diameter of the tubular outer peripheral wall in a direction perpendicular to the axial direction, and the inner diameter of the ring is substantially the same as the diameter of the tubular inner peripheral wall in the direction perpendicular to the axial direction.

In the honeycomb substrate holder (100), a fluid can be circulated or retained inside the tubular gap (20).

The honeycomb substrate holder (100) further comprises a fluid introduction port (51) and a fluid discharge port (52) on the tubular outer peripheral wall (30). The fluid introduction port (51) is arranged near one end face (41) of the two end faces of the tubular outer peripheral wall (30), and the fluid discharge port (52) is arranged near the other end face (41) of the tubular outer peripheral wall (30). The fluid introduction port (51) and the fluid discharge port (52) are preferably arranged in such positions distant from each other, whereby the fluid can be circulated evenly inside the tubular gap without staying in a specific portion of the tubular gap.

In the honeycomb substrate holder (100), a honeycomb substrate used as a reactor can be inserted into the space on the axis (60) side of the tubular inner peripheral wall (10). The honeycomb substrate holder (100) may be used to retain one honeycomb substrate by one honeycomb substrate holder.

The honeycomb substrate holder (100) does not comprise a tubular support wall, but may comprise a tubular support wall on the outside of the tubular outer peripheral wall (30).

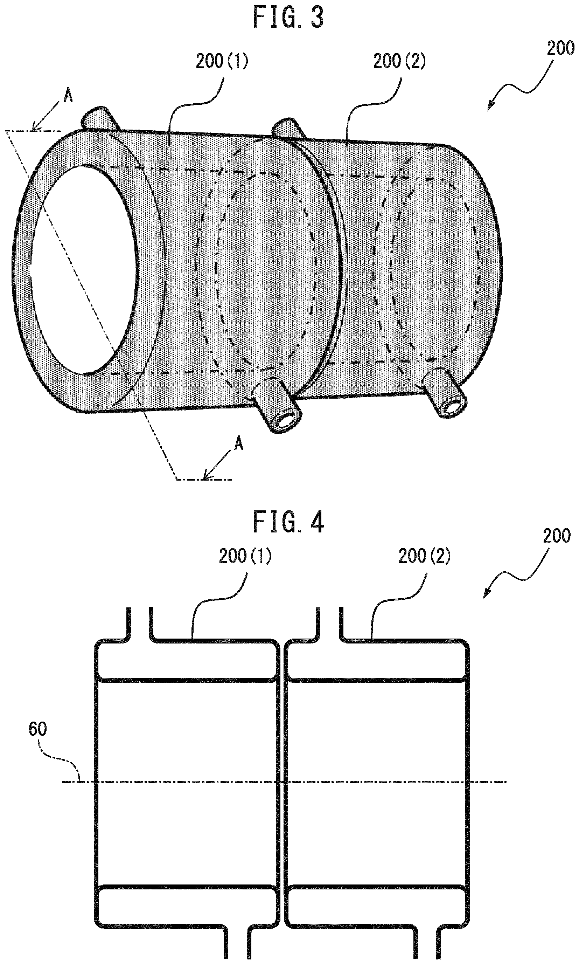

FIG. 3 is a schematic perspective view showing another example of a configuration of the honeycomb substrate holder of the present invention. FIG. 4 is a cross-sectional view of the honeycomb substrate holder of FIG. 3 along the A-A line.

An aspect in which two honeycomb substrate holders (200 (1), 200 (2)) are arranged in series are shown in FIGS. 3 and 4. The basic configuration of each of the honeycomb substrate holders (200 (1), 200 (2)) is substantially the same as the honeycomb substrate holder (100) in FIGS. 1 and 2. However, the two honeycomb substrate holders (200 (1), 200 (2)) each have a short length along the axis (60), are arranged in series, and are intended to be used as a single honeycomb substrate holder group (200) set.

In the honeycomb substrate holder group (200), a honeycomb substrate used as a reactor can be inserted into the space on the axis (60) side of the tubular inner peripheral wall of each of the two honeycomb substrate holders (200 (1), 200 (2)). The honeycomb substrate holder group (200) may be used to retain one honeycomb substrate by two honeycomb substrate holders (200 (1), 200 (2)) arranged in series. According to such an aspect of use, a different temperature control is allowed for each region of the honeycomb substrate holder.

The honeycomb substrate holder group (200) is composed of two honeycomb substrate holders (200 (1), 200 (2)). However, three or more honeycomb substrate holders arranged in series may constitute a single honeycomb substrate holder group set. The number of the honeycomb substrate holders constituting a single honeycomb substrate holder group set may be 2 or greater, 3 or greater, 4 or greater, 5 or greater, or 6 or greater, and may be 10 or less, 8 or less, 6 or less, 5 or less, 4 or less, or 3 or less.

The honeycomb substrate holder group (200) does not comprise a tubular support wall, but may comprise a tubular support wall outside the tubular outer peripheral wall (30). In this case, the entire honeycomb substrate holder group (200) may be covered by one tubular support wall, or each of the two honeycomb substrate holders (200 (1), 200 (2)) may be covered by one tubular support wall.

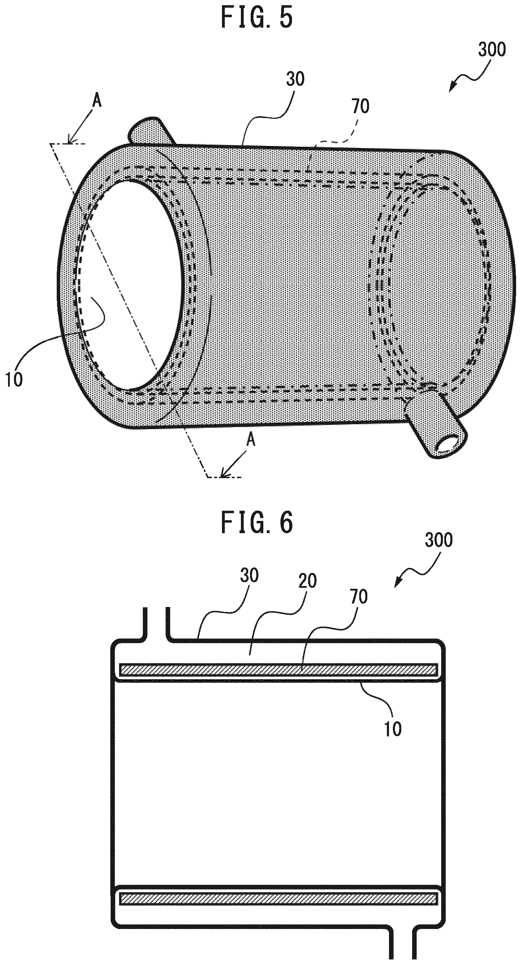

FIG. 5 is a schematic perspective view showing yet another example of a configuration of the honeycomb substrate holder of the present invention. FIG. 6 is a cross-sectional view of the honeycomb substrate holder of FIG. 5 along the A-A line.

The basic configuration of the honeycomb substrate holder (300) of FIGS. 5 and 6 is substantially the same as the honeycomb substrate holder (100) in FIGS. 1 and 2. However, the honeycomb substrate holder (300) comprises a temperature regulator (70) inside the tubular gap (20) between the tubular inner peripheral wall (10) and the tubular outer peripheral wall (30).

The temperature regulator (70) may be, for example, a ribbon heater for heating or a Peltier element for cooling, as described above.

The honeycomb substrate holder (300) does not comprise a tubular support wall, but may comprise a tubular support wall outside the tubular outer peripheral wall (30).

### <Variation of honeycomb substrate holder>

The honeycomb substrate holder of the present invention is not limited to the aspects specifically indicated above, and appropriate changes may be applied thereto by a person skilled in the art.

### <<Reaction method>>

The reaction method of the present invention is a method in which a honeycomb substrate is inserted into the axis side of the tubular inner peripheral wall of the honeycomb substrate holder of the present invention described above, and then the honeycomb substrate is used as a reactor to carry out a chemical reaction.

### <Honeycomb substrate>

The honeycomb substrate used in the reaction method of the present invention may have any shape and size as long as the honeycomb substrate can be inserted into an axis side of the tubular inner peripheral wall of the honeycomb substrate holder.

The honeycomb substrate may, for example,
include a plurality of channels, the plurality of channels being separated by a porous wall, wherein
the porous wall is composed of a porous body that includes open pores penetrating the porous wall in the thickness direction.

The honeycomb substrate may be
a straight flow-type honeycomb substrate in which each of the plurality of channels penetrates from an inlet side end face to an outlet side end face, or
a wall flow-type honeycomb substrate in which the plurality of channels are formed of an inlet side channel that is opened on the inlet side end face and closed on the outlet side end face, and
   an outlet side channel that is opened on the outlet side end face and closed on the inlet side end face.

The porous wall of the honeycomb substrate may comprise a reaction catalyst at least on a surface thereof.

### <Reaction>

The reaction carried out by the reaction method of the present invention is typically a chemical reaction. The chemical reaction may be any chemical reaction as long as the chemical reaction can be carried out using a honeycomb substrate as a reactor. For example, a chemical reaction between a liquid phase reactant and a fine-bubbled gas phase reactant, as described in PTL 2, is preferable.

### EXAMPLES

### <<Comparative Example 1»

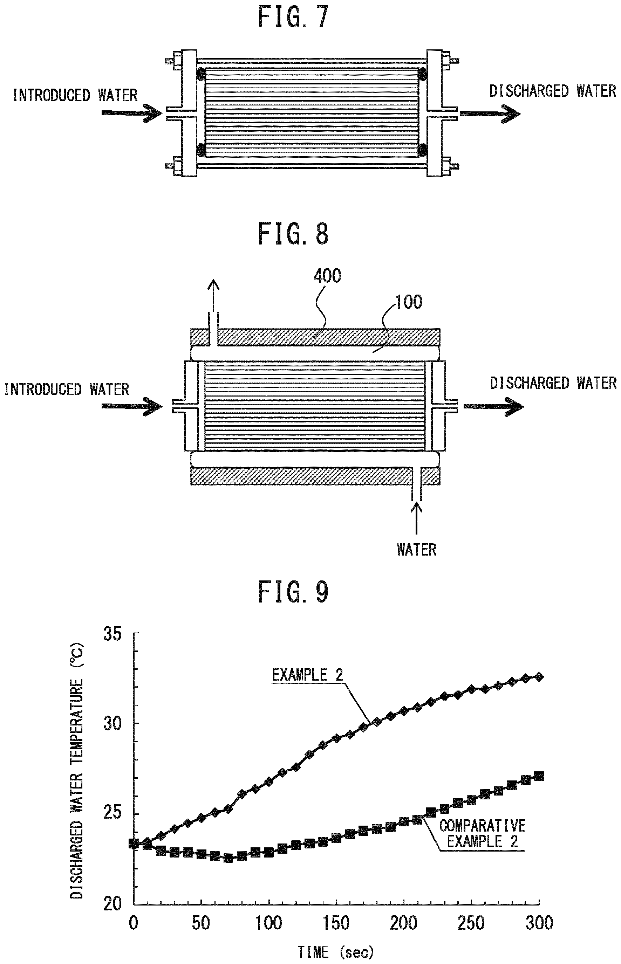

A flange comprising a reactant introduction port and a flange comprising a product discharge port were each mounted via an O-ring on an end face of a straight flow-type honeycomb substrate (capacity of 30 mL) made of cordierite, and clamped in the axial direction of the substrate to form a reaction apparatus shown in FIG. 7.

Using a plunger pump, deionized water was fed from the reactant introduction port of the reaction apparatus at a flow rate of 40 mL/min for 5 min (total liquid feeding amount of 200 mL). During the 5-min period, the amount of deionized water discharged from the product discharge port was 152 mL. Specifically, it was calculated that 24% of the deionized water fed in the 5-min period was exuded in Comparative Example 1 ({(200 - 152)/200} × 100 = 24%).

### «Example 1»

A flange comprising a reactant introduction port and a flange comprising a product discharge port were each mounted on an end face of a honeycomb substrate made of cordierite, which was of the same type and size as the one used in Comparative Example 1. At this time, flanges having a diameter substantially the same as that of the honeycomb substrate were used. Further, no O-rings were used.

The honeycomb substrate on which the flanges were mounted was inserted into the axis side of the honeycomb substrate holder (100). The honeycomb substrate holder (100) used herein included a fluid introduction port (51) and a fluid discharge port (52) and was made entirely of chloroprene rubber. The length of the honeycomb substrate holder (100) was set to a length at which the entire outer peripheral surface of the honeycomb substrate and the contact surfaces between the flanges and the honeycomb substrate end faces could be covered. The capacity of the tubular gap (20) of the honeycomb substrate holder (100) was about 500 mL.

A tubular support wall (400) made of polypropylene was further installed on the outside of the tubular outer peripheral wall of the honeycomb substrate holder (100) to form a reaction apparatus having the structure shown in FIG. 8.

Water was then injected from the fluid introduction port (51) of the honeycomb substrate holder (100) to fill the tubular gap (20) with water. While a pressure of 0.2 MPa was applied inside the tubular gap (20), the fluid introduction port (51) and the fluid discharge port (52) were sealed.

In this state, deionized water was fed from the reactant introduction port of the reaction apparatus at a flow rate of 40 mL/min for 5 min, in the same manner as in Comparative Example 1. During the 5-min period, the amount of deionized water discharged from the product discharge port was 200 mL. Specifically, no leakage of deionized water fed during the 5-min period was observed in Example 1.

According to the above results, the contact surfaces between the honeycomb substrate end faces and the flanges and the outer peripheral surface of the porous honeycomb substrate were both sufficiently sealed by the honeycomb substrate holder of the present invention. It was verified that the leakage of reactants from the above portions could be prevented.

### <<Comparative Example 2»

In Comparative Example 2, except that a straight flow-type honeycomb substrate (capacity of 30 mL) made of stainless steel was used as the honeycomb substrate, a reaction apparatus having the same configuration used in Comparative Example 1 was used for testing.

The entire reaction apparatus was placed inside a thermostatic chamber temperature-controlled at 70°C. Immediately after placement, deionized water at 20°C was fed from the reactant introduction port of the reaction apparatus at a flow rate of 40 mL/min. The inside of the honeycomb substrate was then filled with deionized water, the time when the deionized water began to discharge from the product discharge port of the reaction apparatus was set to 0 (zero), and the temperature of the discharged water over time was measured. A graph indicating the change over time of discharged water temperature is shown in FIG. 9.

### <<Example 2>>

In Example 2, except that a honeycomb substrate made of stainless steel, which was of the same type and size as that used in Comparative Example 2, was used as the honeycomb substrate, a reaction apparatus having the same configuration used in Example 1 was used for testing.

Water (warm water) at 70°C was fed from the fluid introduction port (51) of the reaction apparatus at a flow rate of 300 mL/min. The tubular gap (20) of the honeycomb substrate holder (100) was filled with warm water. When the warm water began to discharge from the fluid discharge port (52), deionized water at 20 °C was fed from the reactant introduction port of the reaction apparatus at a flow rate of 40 mL/min. The inside of the honeycomb substrate was then filled with deionized water, the time when the deionized water began to discharge from the product discharge port of the reaction apparatus was set to 0 (zero), and the temperature of the discharged water over time was measured. A graph indicating the change over time of discharged water temperature is shown in FIG. 9.

With reference to FIG. 9, it was verified that when the honeycomb substrate holder of the present invention was used, the temperature of reactants could be controlled more quickly than when a thermostatic chamber was used for temperature control in Comparative Example 2.

### REFERENCE SIGNS LIST

- 10: tubular inner peripheral wall
- 20: tubular gap
- 30: tubular outer peripheral wall
- 41,42: end face
- 51: fluid introduction port
- 52: fluid discharge port
- 60: axis
- 70: temperature regulator
- 100, 200 (1), 200 (2), 300: honeycomb substrate holder
- 200: honeycomb substrate holder group
- 400: tubular support wall

## Claims

1. A honeycomb substrate holder for retaining a honeycomb substrate used as a reactor, wherein
the honeycomb substrate holder comprises at least
an elastically deformable tubular inner peripheral wall;
a tubular outer peripheral wall arranged outside the tubular inner peripheral wall via a tubular gap with the tubular inner peripheral wall; and
two end faces sealing the tubular gap with the tubular inner peripheral wall and the tubular outer peripheral wall,
the honeycomb substrate can be inserted into an axis side of the tubular inner peripheral wall,
a fluid can be circulated or retained inside the tubular gap, and
by pressurizing the fluid inside the tubular gap, the tubular inner peripheral wall can be elastically deformed and the tubular inner peripheral wall can be pressed against an outer peripheral surface of the honeycomb substrate.

2. The honeycomb substrate holder according to claim 1, comprising one or more fluid introduction ports for introducing the fluid into the tubular gap and one or more fluid discharge ports for discharging the fluid from the tubular gap at any positions on the tubular outer peripheral wall and the end faces.

3. The honeycomb substrate holder according to claim 1 or 2, wherein the fluid is a heat medium or a coolant.

4. The honeycomb substrate holder according to claim 1 or 2, comprising a temperature regulator inside the tubular gap.

5. The honeycomb substrate holder according to claim 1 or 2, comprising a temperature regulator outside the tubular outer peripheral wall.

6. The honeycomb substrate holder according to any one of claims 1 to 5, wherein the tubular inner peripheral wall, the tubular outer peripheral wall, and the two end faces are integrally formed and elastically deformable.

7. The honeycomb substrate holder according to any one of claims 1 to 6, comprising a tubular support wall outside the tubular outer peripheral wall.

8. The honeycomb substrate holder according to any one of claims 1 to 7, wherein the tubular inner peripheral wall has a cylindrical shape or a polygonal tubular shape.

9. A reaction method, comprising
inserting a honeycomb substrate into an axis side of a tubular inner peripheral wall of the honeycomb substrate holder according to any one of claims 1 to 8, and
using the honeycomb substrate as a reactor to carry out a chemical reaction.

10. The reaction method according to claim 9, wherein the chemical reaction is a chemical reaction between a liquid phase reactant and a fine-bubbled gas phase reactant.

11. The reaction method according to claim 9 or 10, wherein
the honeycomb substrate
includes a plurality of channels, the channels being separated by a porous wall, wherein
the porous wall is composed of a porous body that includes open pores penetrating in a thickness direction of the porous wall.

12. The reaction method according to claim 11, wherein the porous wall comprises a reaction catalyst at least on a surface thereof.
